# DEMANDE DE BREVET EUROPEEN

(11) **EP 2 053 568 A1**
(43) Date de publication de la demande: **29.04.2009**
(21) Numéro de dépôt: 07301410.2
(22) Date de dépôt: 28.09.2007
(51) Int. Cl.: G07F 7/10, G06F 21/00

(54) **Procédé de génération de masques dans un objet communiquant et objet communiquant correspondant**

(71) Demandeur: GEMPLUS, 13420 Gémenos (FR)
(72) Inventeur: Amiel, Frédéric, CARNOUX 13470 (FR); Gauteron, Laurent, MARIGNANE 13700 (FR)

(57) **Abrégé**

L'invention concerne un procédé de génération de masques dans un objet communiquant, les masques étant destinés à masquer des données à stocker dans l'objet communiquant. Au moins un masque maître (11) est stocké dans l'objet communiquant.

Selon l'invention, le procédé consiste à :
- appliquer au moins un diversifiant (D) au masque maître (11), de manière à générer un masque diversifié (14) ;
- masquer par une fonction réversible (12) la donnée (10) à stocker dans l'objet communiquant à l'aide du masque diversifié (14), le masquage générant une donnée masquée (15) ;
- stocker la donnée masquée (15) dans l'objet communiquant avec le diversifiant (D) ayant servi à générer le masque diversifié (14) ayant permis d'obtenir la donnée masquée (15).

L'invention concerne également un objet communiquant comprenant des moyens mettant en oeuvre un tel procédé.

## Description

Le domaine de l'invention est celui des objets communiquants, tels que notamment les cartes à puce, les téléphones mobiles ou les PDAs. Plus précisément, la présente invention concerne un procédé de génération de masques dans un objet communiquant.

Dans la suite de cette description, on appellera « masque » une fonction numérique destinée à masquer une donnée sensible ou des instructions d'un programme que l'on désire garder secrète dans l'objet communiquant. Dans le domaine de la carte à puce, une telle donnée est par exemple une clé, un code, un identifiant du propriétaire de la carte ou alors un algorithme ou des instructions que l'on ne souhaite pas divulguer à un attaquant éventuel. Ces données ne sont donc pas stockées « en clair » dans la carte.

Afin de masquer une donnée sensible dans une carte à puce, il est connu d'appliquer une fonction mathématique à cette donnée sensible. La donnée résultante est alors une donnée masquée qui est stockée dans la mémoire de la carte. Ultérieurement, si l'on souhaite lire cette donnée sensible, une fonction mathématique inverse de la précédente est appliquée à la donnée masquée et la donnée sensible peut alors être récupérée pour son utilisation, par exemple pour l'exécution d'un programme.

La fonction mathématique est par exemple un Ou-Exclusif.

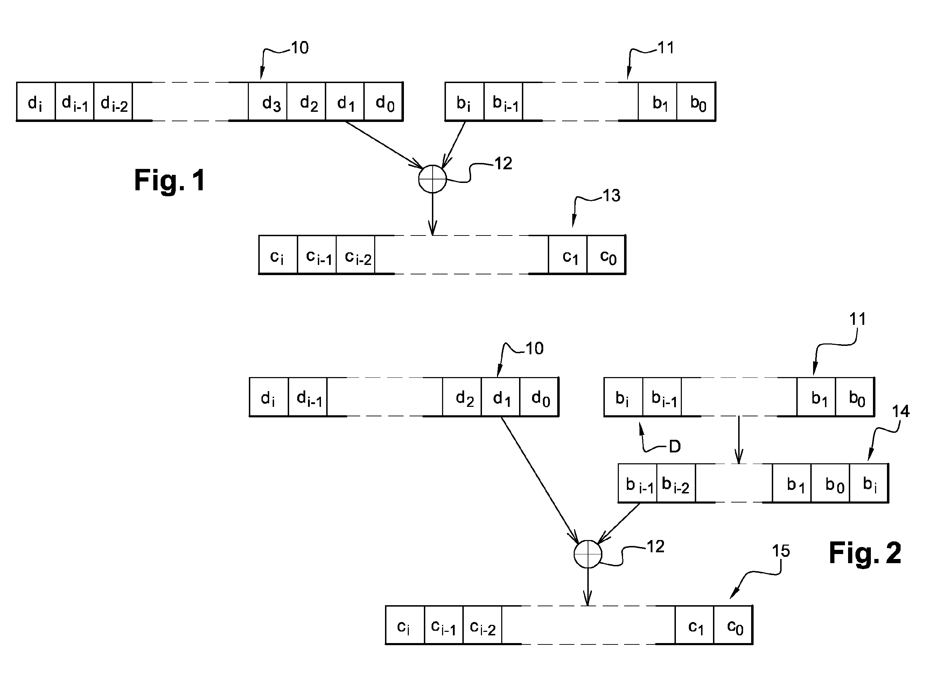

La figure 1 représente le masquage d'une donnée 10 comprenant i octets d₀ à dᵢ. Le masque utilisé pour masquer la donnée 10 est noté 11 et comporte également i octets b₀ à bᵢ. La fonction de masquage est ici une fonction Ou-exclusif 12. La donnée masquée est notée 13 et comporte i octets c₀ à cᵢ, avec cᵢ = dᵢ ⊕ bᵢ. Le masquage consiste donc à réaliser un Ou-exclusif orienté octet.

En appliquant le masque 11 à la donnée masquée 13 par la fonction Ou-exclusif, on régénère la donnée 10, la fonction Ou-exclusif étant réversible.

L'inconvénient de cette solution connue est qu'il est possible à un attaquant de retrouver le masque 11 en injectant des fautes dans l'objet communiquant, par exemple une carte à puce, ou en exploitant des dysfonctionnements de celui-ci. Ces attaques sont également appelées des attaques par « dump » en anglais. Si le masque 11 est révélé à l'attaquant, celui-ci pourra sans difficulté particulière lire l'ensemble des données masquées mémorisées dans l'objet communiquant.

Une solution pour pallier à cet inconvénient lié à la présence d'un masque unique est de prévoir plusieurs masques dans l'objet communiquant et de changer de masque en fonction de l'application ou du type de donnée à masquer. Cette solution présente néanmoins l'inconvénient de nécessiter la mémorisation de plusieurs masques dans l'objet communiquant, ce qui n'est guère envisageable lorsque la ressource mémoire est petite, ce qui est le cas des cartes à puce.

La présente invention a pour objectif de remédier à cet inconvénient.

Plus précisément, un des objectifs de l'invention est de proposer un procédé de masquage de données pour objet communiquant permettant de masquer un nombre très important de données sans nécessiter de mémorisation de plus d'un masque ou tout du moins d'un nombre de masques important.

Cet objectif, ainsi que d'autres qui apparaîtront par la suite, est atteint grâce à un procédé de génération de masques dans un objet communiquant, les masques étant destinés à masquer des données à stocker dans l'objet communiquant, au moins un masque maître étant stocké dans l'objet communiquant, le procédé consistant à :
- appliquer au moins un diversifiant au masque maître, de manière à générer un masque diversifié ;
- masquer par une fonction réversible la donnée à stocker dans l'objet communiquant à l'aide du masque diversifié, le masquage générant une donnée masquée ;
- stocker la donnée masquée dans l'objet communiquant avec le diversifiant ayant servi à générer le masque diversifié ayant permis d'obtenir la donnée masquée.

L'application de diversifiants au masque maître permet ainsi d'obtenir des masques diversifiés qui sont utilisés pour masquer les données.

De préférence, la fonction réversible utilisée est une fonction Ou-Exclusif.

Avantageusement, l'application d'un diversifiant au masque maître consiste à appliquer une rotation au masque maître. Ainsi, la génération de masques diversifiés consiste en de simples rotations du masque maître. Pour un masque maître de 256 octets, il sera donc possible de générer 256 masques différents si la rotation est orientée octets. II est bien entendu également possible d'effectuer des rotations au niveau bit, ce qui augmente encore le nombre de masques différents pouvant être générés.

Le diversifiant est de préférence généré de manière pseudo-aléatoire dans l'objet communiquant. Ceci présente l'avantage de pouvoir masquer les données à la volée.

Avantageusement, les masques maîtres sont diversifiés d'un objet communiquant à un autre. Ainsi, même si un attaquant réussit à découvrir le masque maître d'un objet communiquant, il ne pourra pas démasquer les données mémorisées dans un autre objet communiquant puisque leurs masques maîtres sont différents.

L'invention concerne également un objet communiquant comprenant des moyens de mise en oeuvre d'un tel procédé.

L'objet communiquant consiste préférentiellement en une carte à puce.

D'autres avantages et caractéristiques de la présente invention apparaîtront à la lecture de la description suivante d'un mode de mise en oeuvre préférentiel, donné à titre illustratif et non limitatif, et des dessins annexés, dans lesquels :
- la figure 1 représente le principe de masquage d'une donnée, conformément à l'état de la technique ;
- la figure 2 représente un mode de mise en oeuvre préférentiel du procédé selon l'invention.

La figure 1 a été décrite précédemment en référence à l'état de la technique.

La figure 2 représente un mode de mise en oeuvre préférentiel du procédé selon l'invention.

Dans ce mode de mise en oeuvre préférentiel, un masque 11, appelé masque maître, est utilisé. Le masque maître 11 est mémorisé dans l'objet communiquant. L'invention propose d'appliquer un diversifiant D au masque maître 11 afin de générer un masque diversifié 14.

Dans un mode de mise en oeuvre préférentiel, le diversifiant D est un simple pointeur qui marque l'octet du masque maître 11 qui sera utilisé pour masquer le premier octet de la donnée 10. Sur la figure 2, le diversifiant D pointe sur l'octet bᵢ₋₁ et c'est donc cet octet qui sera le premier du masque diversifié. Les autres octets sont pris les uns à la suite des autres, dans un mode de mise en oeuvre simplifié. On obtient ainsi, un masque diversifié 14 dont le premier octet est bᵢ₋₁ et le dernier octet est bᵢ. On aura donc simplement appliqué une rotation aux octets du masque maître 11. Il est également possible d'appliquer des rotations aux bits du masque maître 11, la rotation étant alors orientée bits.

Ensuite, les octets d₀ à dᵢ de la donnée 10 sont masqués à l'aide des octets du masque diversifié 14 pour fournir la donnée masquée 15.

Afin de pouvoir démasquer la donnée masquée 15, celle-ci est stockée dans l'objet communiquant avec le diversifiant D qui a servi à générer le masque diversifié 14, c'est-à-dire avec le diversifiant ayant permis de l'obtenir. La donnée masquée 15 est de ce fait associée au diversifiant D.

Lors de l'écriture ou de la création d'une autre donnée dans la carte, un autre diversifiant sera généré, de préférence de manière aléatoire, afin de générer un autre masque diversifié qui servira au masquage de cette autre donnée.

L'avantage de l'invention est qu'il est possible de générer autant de masques diversifiés qu'il y a d'octets (ou de bits) dans le masque maître 11. Le stockage du diversifiant D est peu gourmand en place mémoire, typiquement un octet.

Afin de renforcer la sécurité du procédé selon l'invention, il est possible d'utiliser plus d'un masque maître, par exemple deux, et de générer deux diversifiants D1 et D2. Le diversifiant D1 sera appliqué au premier masque maître et le diversifiant D2 au second masque maître. Chaque octet d'une donnée à masquer sera masqué, par exemple à l'aide de la fonction Ou-exclusif, par un octet du premier masque diversifié et par un octet du second masque diversifié. Les diversifiants D1 et D2 seront alors stockés avec la donnée masquée. Pour un masque maître de 256 octets, il est alors possible de générer 256² masques différents.

L'invention s'applique particulièrement bien dans un environnement Java, les diversifiants pouvant être stockés avec l'entête des objets Java.

La fonction réversible Ou-Exclusif n'est pas la seule qui puisse être employée : il est possible d'utiliser une fonction DES ou alors une simple rotation. Toute fonction réversible convient à l'invention.

Le diversifiant D est de préférence généré aléatoirement ou pseudo-aléatoirement lorsque la donnée 10 est inscrite/créée dans l'objet communiquant ou à chaque redémarrage de l'objet communiquant.

D'un objet communiquant à un autre, les masques maîtres 11 sont de préférence diversifiés. Ceci assure qu'en cas d'attaque réussie sur un objet communiquant, l'attaquant en possession d'un masque maître ne puisse démasquer les données masquées dans un autre objet communiquant.

L'invention s'applique à tout objet communiquant, tel que par exemple aux téléphones portables et préférentiellement aux cartes à puce, par exemple aux cartes à puce multi-applicatives.

## Revendications

1. Procédé de génération de masques (14) dans un objet communiquant, lesdits masques (14) étant destinés à masquer des données (10) à stocker dans ledit objet communiquant, au moins un masque maître (11) étant stocké dans ledit objet communiquant, ledit procédé consistant à :
- appliquer au moins un diversifiant (D) audit masque maître (11), de manière à générer un masque diversifié (14) ;
- masquer par une fonction réversible (12) ladite donnée (10) à stocker dans ledit objet communiquant à l'aide dudit masque diversifié (14), ledit masquage générant une donnée masquée (15) ;
- stocker ladite donnée masquée (15) dans ledit objet communiquant avec le diversifiant (D) ayant servi à générer le masque diversifié (14) ayant permis d'obtenir ladite donnée masquée (15).

2. Procédé selon la revendication 1, **caractérisé en ce que** ladite fonction réversible est une fonction Ou-Exclusif (12).

3. Procédé selon l'une des revendications 1 et 2, **caractérisé en ce que** ladite application d'un diversifiant (D) audit masque maître (11) consiste à appliquer une rotation audit masque maître (11).

4. Procédé selon l'une des revendications 1 à 3, **caractérisé en ce que** ledit diversifiant (D) est généré de manière pseudo-aléatoire dans ledit objet communiquant.

5. Procédé selon l'une des revendications 1 à 4, **caractérisé en ce que** les masques maîtres (11) sont diversifiés d'un objet communiquant à un autre.

6. Objet communiquant comprenant des moyens de mise en oeuvre d'un procédé selon l'une des revendications 1 à 5.

7. Objet communiquant selon la revendication 6, **caractérisé en ce qu'**il consiste en une carte à puce.
